# EUROPÄISCHE PATENTANMELDUNG

(11) **EP 2 053 328 A1**
(43) Veröffentlichungstag der Anmeldung: **29.04.2009**
(21) Anmeldenummer: 07023680.7
(22) Anmeldetag: 06.12.2007
(51) Int. Cl.: F25J 3/04

(54) **Verfahren zur Tieftemperatur-Luftzerlegung**

(30) Priorität: 25.10.2007 DE 102007051183
(71) Anmelder: Linde Aktiengesellschaft, 80807 München (DE)
(72) Erfinder: Lochner, Stefan, 85567 Grafing (DE)
(74) Vertreter: Imhof, Dietmar

(57) **Zusammenfassung**

Das Verfahren dient zur Tieftemperatur-Luftzerlegung. Einsatzluft (8) wird in einem Hauptwärmetauscher (9) abgekühlt und in ein Destilliersäulen-System zur Stickstoff-Sauerstoff-Trennung eingeleitet (11, 43), das mindestens eine Einzelsäule (12) aufweist. Mindestens ein stickstoffangereicherter oder sauerstoffangereicherter Produktstrom (15, 16, 17; 53; 51, 56, 57; 19, 60) wird aus dem Destilliersäulen-System zur Stickstoff-Sauerstoff-Trennung entnommen und in dem Hauptwärmetauscher (9) angewärmt. Ein Fluid aus einer externen Quelle wird mindestens zeitweise in einen Flüssigtank (70) geleitet. Mindestens zeitweise wird Fluid (71) in flüssigem Zustand aus dem Flüssigtank (70) entnommen, in dem Hauptwärmetauscher (9) verdampft und als gasförmiges Zusatzprodukt (72, 73) gewonnen.

## Beschreibung

Die Erfindung betrifft ein Verfahren zur Tieftemperatur-Luftzerlegung gemäß dem Oberbegriff des Patentanspruchs 1.

Verfahren und Vorrichtungen zur Tieftemperaturzerlegung von Luft sind zum Beispiel aus Hausen/Linde, Tieftemperaturtechnik, 2. Auflage 1985, Kapitel 4 (Seiten 281 bis 337) bekannt. Das Destilliersäulen-System zur Stickstoff-Sauerstoff-Trennung der Erfindung weist eine Einzelsäule zur Stickstoffgewinnung auf. Zusätzlich kann das Destilliersäulen-System zu den Kolonnen zur Stickstoff-Sauerstoff-Trennung weitere Vorrichtungen zur Gewinnung anderer Luftkomponenten, insbesondere von Reinsauerstoff und/oder Edelgasen, aufweisen, beispielsweise eine Argongewinnung.

Der Erfindung liegt die Aufgabe zu Grunde, das Verfahren und die Vorrichtung wirtschaftlich besonders günstig zu betreiben.

Diese Aufgabe wird durch die kennzeichnenden Merkmale des Patentanspruchs 1 gelöst.

Das externe Fluid aus dem Flüssigtank wird nicht wie üblich mittels eines externen Wärmetauschers (beispielsweise einem Wasserbad-Verdampfer oder einem luftbeheizten Verdampfer) angewärmt, sondern im Hauptwärmetauscher, in dem die Einsatzluft für das Destilliersäulen-System abgekühlt wird. Hierdurch kann die Kälte, die in dem externen Fluid enthalten ist, für das Zerlegungsverfahren zurückgewonnen werden, indem sie in dem Hauptwärmetauscher auf Einsatzluft übertragen wird.

Das Fluid stammt aus einer "externen Quelle", das heißt nicht aus einer der Trennsäulen des Destilliersäulen-System zur Stickstoff-Sauerstoff-Trennung oder einer dem Destilliersäulen-System zur Stickstoff-Sauerstoff-Trennung nachgeschalteten Trennsäule. Vorzugsweise wird es aus einer anderen Anlage zur Erzeugung verflüssigter Gas antransportiert, beispielsweise mittels eines Tankwagens. Es kann sich dabei um ein Fluid, das die chemische Zusammensetzung eines der Produktströme des Destilliersäulen-Systems zur Stickstoff-Sauerstoff-Trennung aufweist. Vorzugsweise weist das Fluid jedoch eine andere Zusammensetzung als diese Produktströme auf und besteht beispielsweise aus Argon oder Wasserstoff. Das erfindungsgemäße Verfahren eignet sich damit insbesondere für die Versorgung von Betrieben der Halbleiterindustrie mit technischen Gasen. Diese benötigen häufig eine so geringe Menge an Argon und/oder reinem Sauerstoff, dass es sich nicht lohnt, dem Destilliersäulen-System zur Stickstoff-Sauerstoff-Trennung eine Argongewinnung nachzuschalten. Außerdem kann auch die Kälte von Gasen wie Wasserstoff, die nicht in Luftzerlegungsanlagen gewonnen werden, für die Luftzerlegung genutzt und damit der Energieverbrauch der Zerlegung verringert werden.

Der "Hauptwärmetauscher" wird vorzugsweise durch einen einzigen Wärmetauscherblock gebildet. Bei größeren Anlagen kann es sinnvoll sein, den Hauptwärmetauscher durch mehrere hinsichtlich des Temperaturverlaufs parallel geschaltete Stränge zu realisieren, die durch voneinander getrennte Bauelemente gebildet werden. Grundsätzlich ist es möglich, dass der Hauptwärmetauscher beziehungsweise jeder dieser Stränge durch zwei oder mehr seriell verbundene Blöcke gebildet wird.

Es ist günstig, wenn an dem Fluid keine Druckerhöhung zwischen Flüssigtank und Hauptwärmetauscher vorgenommen wird.

Vorzugsweise wird das Fluid unter einem Druck in den Hauptwärmetauscher eingeleitet, der nicht höher als der Betriebsdruck des Flüssigtanks ist. Der Betriebsdruck des Flüssigtanks kann konstant sein oder schwanken, zum Beispiel im Rahmen der Druckhaltung im Tank und des Gasabnehmersystems. Für den Fall, dass der Betriebsdruck des Flüssigtanks schwnakt, ist hier der momentane Betriebsdruck gemeint.

Es ist günstig, wenn der Betriebsdruck des Flüssigtanks mindestens 1 bar über dem Atmosphärendruck liegt, vorzugsweise mindestens 1 bar über dem Produktdruck des gasförmigen Zusatzprodukts, unter dem dieses an eine Anwendung oder eine Nachverdichtungseinheit abgegeben wird. Der Betriebsdruck des Flüssigtanks beträgt beispielsweise 2 bis 36 bar, vorzugsweise 5 bis 16 bar. Der Überdruck kann durch jede bekannte Maßnahme, beispielsweise durch das Befüllen mit unter entsprechendem Druck stehendem Fluid oder durch Druckaufbauverdampfung gebildet werden.

Weitere bevorzugte Ausführungsformen der Erfindung sind in den abhängigen Ansprüchen 5 bis 12 angegeben. Die näheren Ausführungen zu diesen Merkmalen, die in der parallel eingereichten deutschen Patentanmeldung 102007051184.3 (internes Aktenzeichen des Anmelders: P07164-DE/AVA = EM-GTG1267a) und den dazu korrespondierenden Anmeldungen gemacht werden, gelten auch für hier beschriebene Verfahren und eine entsprechende Vorrichtung.

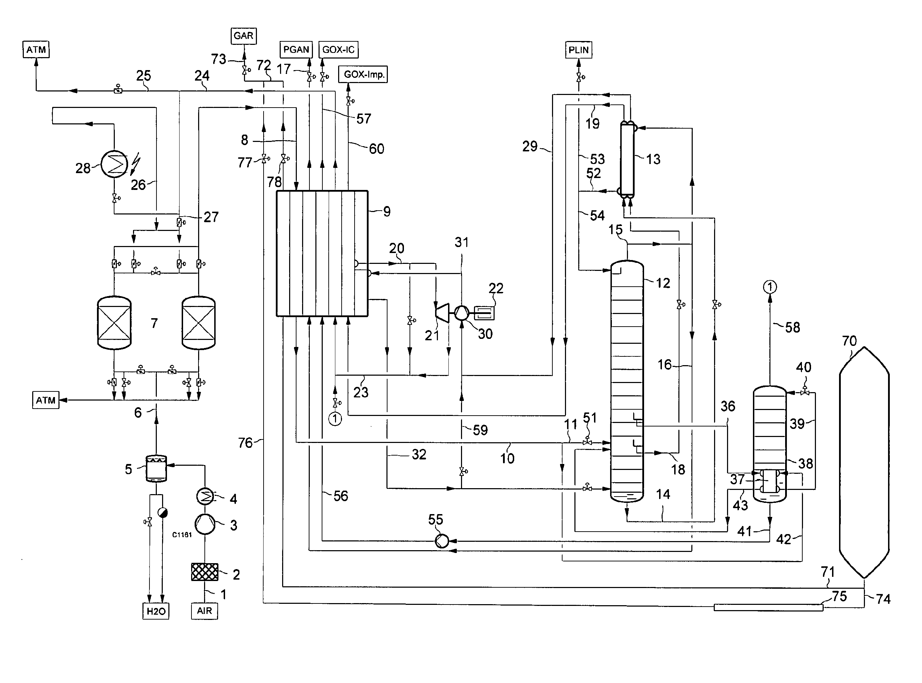

Die Erfindung sowie weitere Einzelheiten der Erfindung werden im Folgenden anhand eines in der Zeichnung schematisch dargestellten Ausführungsbeispiels näher erläutert.

Das Destilliersäulen-System des Ausführungsbeispiels weist eine Einzelsäule 12 und eine Reinsauerstoffsäule 38 auf. (Die Erfindung ist ebenso auf ein analoges Verfahren ohne Reinsauerstoffsäule anwendbar.) Atmosphärische Luft 1 wird über ein Filter 2 von einem Luftverdichter angesaugt und dort auf einen Absolutdruck von 6 bis 20 bar, vorzugsweise etwa 9 bar verdichtet. Nach Durchströmen eines Nachkühlers 4 und eines Wasserabscheiders 5 wird die verdichtete Luft 6 in einer Reinigungsvorrichtung 7 gereinigt, die ein Paar von mit Adsorptionsmaterial, vorzugsweise Molekularsieb, gefüllten Behältern aufweist. Die gereinigte Luft 8 wird in einem Hauptwärmetauscher 9 auf etwa Taupunkt abgekühlt und teilweise verflüssigt. Ein erster Teil 11 der abgekühlten Luft 10 wird über ein Drosselventil 51 in die Einzelsäule 12 eingeleitet. Die Einspeisung erfolgt vorzugsweise einige praktische oder theoretische Böden oberhalb des Sumpfs.

Der Betriebsdruck der Einzelsäule 12 (am Kopf) beträgt 6 bis 20 bar, vorzugsweise etwa 9 bar. Ihr Kopfkondensator wird mit einer zweiten Restfraktion 18 und einer ersten Restfraktion 14 gekühlt. Die erste Restfraktion 14 wird vom Sumpf der Einzelsäule 12 abgezogen, die zweite Restfraktion 14 von einer Zwischenstelle einige praktische oder theoretische Böden oberhalb der Luftzuspeisung oder auf gleicher Höhe wie diese.

Als Hauptprodukt der Einzelsäule 12 wird gasförmiger Stickstoff 15, 16 am Kopf abgezogen, im Hauptwärmetauscher 9 auf etwa Umgebungstemperatur angewärmt und schließlich über Leitung 17 als gasförmiges Druckprodukt (PGAN) abgezogen. Ein Teil 53 des Kondensats 52 aus dem Kopfkondensator 13 kann als Flüssigstickstoffprodukt (PLIN) gewonnen werden; der Rest 54 wird als Rücklauf auf den Kopf der Einzelsäule aufgegeben.

Die zweite Restfraktion 18 wird im Kopfkondensator 13 unter einem Druck von 2 bis 9 bar, vorzugsweise etwa 4 bar verdampft und strömt gasförmig über Leitung 29 zu einem Kaltverdichter 30, in dem sie auf etwa den Betriebsdruck der Einzelsäule rückverdichtet wird. Die rückverdichtete Restfraktion 31 wird im Hauptwärmetauscher 9 wieder auf Säulentemperatur abgekühlt und schließlich über Leitung 32 der Einzelsäule 12 am Sumpf wieder zugeführt.

Die erste Restfraktion 14 wird im Kopfkondensator 13 unter einem Druck von 2 bis 9 bar, vorzugsweise etwa 4 bar verdampft und strömt gasförmig über Leitung 19 zum kalten Ende des Hauptwärmetauschers 9. Aus bei einer Zwischentemperatur wird ein erster Teil 20 der ersten Restfraktion wieder entnommen (Leitung 20). Ein zweiter Teil verbleibt im Hauptwärmetauscher 9, wird dort weiter auf etwa Umgebungstemperatur angewärmt und verlässt über Leitung 60 die Anlage als gasförmiges Unrein-Sauerstoffprodukt (GOX-Imp.). Der erste Teil 20 der ersten Restfraktion wird in einer Entspannungsmaschine 21, die in dem Beispiel als Turboexpander ausgebildet ist, arbeitsleistend auf etwa 300 mbar über Atmosphärendruck entspannt. Die Entspannungsmaschine ist mechanisch gekoppelt mit dem Kaltverdichter 30 und einer Bremseinrichtung 22, die in dem Ausführungsbeispiel durch eine Ölbremse gebildet wird. Die entspannte erste Restfraktion 23 wird im Hauptwärmetauscher 9 auf etwa Umgebungstemperatur angewärmt. Die warme erste Restfraktion 24 wird in die Atmosphäre abgeblasen (Leitung 25) und/oder als Regeneriergas 26, 27 in der Reinigungsvorrichtung 7 eingesetzt, gegebenenfalls nach Erhitzung in der Heizeinrichtung 28. Alternativ oder zusätzlich kann ein Unrein-Sauerstoffprodukt aus der rückverdichteten zweiten Restfraktion 31 abgezweigt und im Hauptwärmetauscher 9 auf etwa Umgebungstemperatur angewärmt werden.

Ein sauerstoffhaltiger Strom 36, der im Wesentlichen frei von schwererflüchtigen Verunreinigungen ist, wird von einer Zwischenstelle der Einzelsäule 12 in flüssigem Zustand abgezogen, die 5 bis 25 theoretische oder praktische Böden oberhalb der Luftzuspeisung angeordnet ist. Der sauerstoffhaltige Strom 36 wird gegebenenfalls in einem Sumpfverdampfer 37 der Reinsauerstoffsäule 38 unterkühlt und über Leitung 39 und Drosselventil 40 auf den Kopf der Reinsauerstoffsäule 38 aufgegeben. Der Betriebsdruck der Reinsauerstoffsäule 38 (am Kopf) beträgt 1,3 bis 4 bar, vorzugsweise etwa 2,5 bar.

Der Sumpfverdampfer 37 der Reinsauerstoffsäule 38 wird außerdem mittels eines zweiten Teils 42 der abgekühlten Einsatzluft 10 gekühlt. Der Einsatzluftstrom 42 wird dabei mindestens teilweise, beispielsweise vollständig kondensiert und strömt über Leitung 43 zur Einzelsäule 12, wo er etwa auf Höhe der Zuspeisung der übrigen Einsatzluft 11 eingeleitet wird.

Vom Sumpf der Reinsauerstoffsäule 38 wird ein Reinsauerstoff-Produktstrom 41 in flüssigem Zustand entnommen, mittels einer Pumpe 55 auf einen erhöhten Druck von 2 bis 100 bar, vorzugsweise etwa 12 bar gebracht, über Leitung 56 zum kalten Ende des Hauptwärmetauschers 9 geführt, dort unter dem erhöhten Druck verdampft und auf etwa Umgebungstemperatur angewärmt und schließlich über Leitung 57 als gasförmiges Produkt (GOX-IC) gewonnen.

Das Kopfgas 58 der Reinsauerstoffsäule 38 wird der entspannten ersten Restfraktion 23 zugemischt. Über eine Bypassleitung 59 wird gegebenenfalls ein Teil der Einsatzluft zur Pumpverhütung des Kaltverdichters 30 zu dessen Eintritt geleitet (anti-surge control).

Bei Bedarf kann der Anlage stromaufwärts und/oder stromabwärts der Pumpe 55 ein flüssiger Sauerstoffs als Flüssigprodukt entnommen werden (in der Zeichnung nicht dargestellt). Zusätzlich kann eine externe Flüssigkeit, zum Beispiel flüssiges Argon, flüssiger Stickstoff oder flüssiger Sauerstoff aus einem Flüssigtank, in dem Hauptwärmetauscher 9 in indirektem Wärmeaustausch mit der Einsatzluft verdampft werden (in der Zeichnung nicht dargestellt).

Ein Flüssigkeitstank 70 wird von Zeit zu Zeit aus einem Tankwagen mit flüssigem Argon als "Fluid" gefüllt. Das Fluid wird unter etwa 12 bar, dem Betriebsdruck des Flüssigtanks, eingeführt. Kontinuierlich wird über eine Leitung 71 flüssiges Fluid unter etwa 12 bar entnommen, unter diesem Druck im Hauptwärmetauscher 9 verdampft und angewärmt und schließlich über die Leitungen 72 und 73 als gasförmiges Zusatzprodukt abgezogen.

Gleichzeitig kann ein weiterer Strom 74 des flüssigen und unter Druck stehenden Fluids aus dem Flüssigtank 70 entnommen, in einem Verdampfer 75, der mittels eines externen Wärmeträgers (zum Beispiel atmosphärischer Luft oder Wasser) verdampft und über Leitung 76 dem gasförmigen Zusatzprodukt hinzugefügt werden. Der Verdampfer 75 kann aber auch zur Notversorgung bei Ausfall des Hauptwärmetauschers 9 genutzt werden. Die Mengenströme werden durch die Ventile 77 und 78 eingestellt.

Das erfindungsgemäße Verfahren und die entsprechende Vorrichtung können besonders günstig in der Halbleiterindustrie oder bei der pyrogenen Kieselsäureherstellung eingesetzt, die sowohl Stickstoff als auch unreinen Sauerstoff und gegebenenfalls reinen Sauerstoff als Produkte benötigen.

## Patentansprüche

1. Verfahren zur Tieftemperatur-Luftzerlegung, bei dem
- Einsatzluft (8) in einem Hauptwärmetauscher (9) abgekühlt und in ein Destilliersäulen-System zur Stickstoff-Sauerstoff-Trennung eingeleitet (11, 43) wird, das mindestens eine Einzelsäule (12) zur Stickstoff-Gewinnung aufweist,
- mindestens ein stickstoffangereicherter oder sauerstoffangereicherter Produktstrom (15, 16, 17; 53; 51, 56, 57; 19, 60) aus dem Destilliersäulen-System zur Stickstoff-Sauerstoff-Trennung entnommen und in dem Hauptwärmetauscher (9) angewärmt wird, und
- ein Fluid aus einer externen Quelle mindestens zeitweise in einen Flüssigtank (70) geleitet wird,
**dadurch gekennzeichnet, dass**
- mindestens zeitweise Fluid (71) in flüssigem Zustand aus dem Flüssigtank (70) entnommen, in dem Hauptwärmetauscher (9) verdampft und als gasförmiges Zusatzprodukt (72, 73) gewonnen wird.

2. Verfahren nach Anspruch 1, **dadurch gekennzeichnet, dass** an dem Fluid (71) keine Druckerhöhung zwischen Flüssigtank (70) und Hauptwärmetauscher (9) vorgenommen wird.

3. Verfahren nach Anspruch 1 oder 2, **dadurch gekennzeichnet, dass** das Fluid (71) unter einem Druck in den Hauptwärmetauscher (9) eingeleitet wird, der nicht höher als der Betriebsdruck des Flüssigtanks (70) ist.

4. Verfahren nach Anspruch 1, 2 oder 3, **dadurch gekennzeichnet, dass** der Betriebsdruck des Flüssigtanks (70) mindestens 1 bar über dem Atmosphärendruck liegt.

5. Verfahren nach einem der Ansprüche 1 bis 4, **dadurch gekennzeichnet, dass**
- die Einzelsäule (12) einen Kopfkondensator (13) aufweist, in dem Dampf aus dem oberen Bereich der Einzelsäule mindestens teilweise kondensiert wird,
- eine erste Restfraktion (14, 19) flüssig aus dem unteren Bereich der Einzelsäule (12) entnommen und in dem Kopfkondensator (13) mindestens teilweise verdampft wird und
- mindestens ein erster Teil (20) der ersten Restfraktion (19) stromabwärts des Kopfkondensators (13) in einer Entspannungsmaschine (21) arbeitsleistend entspannt wird.

6. Verfahren nach Anspruch 5, **dadurch gekennzeichnet, dass** eine zweite Restfraktion (18, 29) aus dem unteren oder mittleren Bereich der Einzelsäule (12) entnommen, rückverdichtet (30) und anschließend mindestens zu einem ersten Teil wieder der Einzelsäule (12) zugeleitet (32) wird.

7. Verfahren nach Anspruch 6, **dadurch gekennzeichnet, dass** die Rückverdichtung der zweiten Restfraktion (18, 29) mittels eines Kaltverdichters (30) vorgenommen wird.

8. Verfahren nach einem der Ansprüche 6 oder 7, **dadurch gekennzeichnet, dass** die bei der arbeitsleistenden Entspannung (21) erzeugte mechanische Energie mindestens teilweise zur Rückverdichtung (30) der zweiten Restfraktion genutzt wird.

9. Verfahren nach einem der Ansprüche 5 bis 8, **dadurch gekennzeichnet, dass** ein zweiter Teil der ersten Restfraktion (19) stromabwärts des Kopfkondensators (13) nicht in die Entspannungsmaschine (21) eingeleitet, sondern als gasförmiges Unrein-Sauerstoffprodukt (60) abgezogen wird und/oder ein zweiter Teil der zweiten Restfraktion stromabwärts des Rückverdichtens (30) als gasförmiges Unrein-Sauerstoffprodukt (160) abgezogen wird.

10. Verfahren nach einem der Ansprüche 5 bis 9, **dadurch gekennzeichnet, dass**
- ein sauerstoffhaltiger Strom (36) der Einzelsäule (12) an einer Zwischenstelle entnommen und einer Reinsauerstoffsäule (38) zugeleitet (39) wird und
- ein Reinsauerstoff-Produktstrom (41) in flüssigem Zustand aus dem unteren Bereich der Reinsauerstoffsäule (38) entnommen wird,
- der Reinsauerstoff-Produktstrom (41, 56) - gegebenenfalls nach Druckerhöhung (55) im flüssigen Zustand in dem Hauptwärmetauscher (9) gegen Einsatzluft (8) verdampft und angewärmt
- und schließlich als gasförmiges Produkt (57) gewonnen wird.

11. Verfahren nach einem der Ansprüche 5 bis 7, **dadurch gekennzeichnet, dass** die erste Restfraktion (14) am Sumpf der Einzelsäule (12) abgezogen wird.

12. Verfahren nach einem der Ansprüche 6 bis 11, **dadurch gekennzeichnet, dass** die zweite Restfraktion (18) von einer Zwischenstelle der Einzelsäule (12) abgezogen, die oberhalb des Sumpfs angeordnet ist, insbesondere oberhalb der Stelle, an der die erste Restfraktion (14) entnommen wird.
